# EUROPEAN PATENT SPECIFICATION

(11) **EP 0 771 761 B1**
(45) Date of publication and mention of the grant of the patent: **29.03.2000**
(21) Application number: 96203059.9
(22) Date of filing: 04.11.1996
(51) Int. Cl.: C02F 3/06, B01D 24/26

(54) **Installation for purifying contaminated water**
Anlage zur Abwasserklärung
Installation de purification des eaux usées

(30) Priority: 03.11.1995 NL 1001576
(43) Date of publication of application: 07.05.1997
(73) Proprietor: Vacuplast-Lucht B.V., 1241 CV Kortenhoef (NL)
(72) Inventor: Van Zalinge, Alex, 1241 NH Kortenhoef (NL)
(74) Representative: Van Someren, Petronella F. H. M.

(56) References cited:
- EP-A- 0 265 303
- EP-A- 0 517 236

## Description

The present invention relates to an installation for purifying contaminated water comprising a filter bed of particulate material, means for carrying contaminated water through the filter bed from below, and means for draining purified water from the filter bed at a level located a determined distance from the top of the bed.

Such an installation is known from EP-A-0 265 303.

Due to the stricter environmental legislation an increasing number of companies are no longer allowed to discharge the waste water they produce directly into communal water or sewer. Examples of companies producing large quantities of waste water are for instance market gardens with glass horticulture and car washes.

It is now compulsory for such companies to purify the waste water before it may be discharged. A purification is however recommended such that the purified water can be re-used within the company.

Many techniques are known for purifying contaminated water. The technique applied in practice depends on many factors, such as the nature of the contamination in the water, the desired degree of purification, cost and the like.

An example of a purification technique is the use of sand filters. These are used inter alia in the preparation of drinking water. The sand filter herein has as its most important function the filtering out of the contaminants. During filtration other processes can however also occur, such as adsorption of substances to the sand particles and degradation of organic substances by micro-organisms. This latter likewise takes place mainly on the surface of the sand particles when sufficient oxygen is present.

Sand filters are used because sand is relatively inexpensive and obtainable nearly everywhere. The construction of a sand filter is expensive however, also because the filter occupies a large surface area per unit of water for purifying. The known sand filters are usually based on the top-down principle. Water is herein arranged on the top of a sand bed. The water subsequently trickles down through the filter, leaving its contaminants behind in the filter and is drained beneath the filter as purified water.

This principle is only possible if the sand does not drain away together with the water. Situated therefore in the bottom of the filter is a supporting grid on which a plurality of layers of gravel and coarse sand are arranged. Because the flow speed in free downward flow is limited, a large filter surface is required to obtain sufficient capacity.

In order to enhance aerobic microbial degradation in the filter this latter must be aerated. For this purpose air is fed into the top of the filter together with the water. The air is sometimes also extracted again in the bottom of the filter. In the currently used filters expensive steps are then required to prevent blockage of the air discharge openings.

For some branches of industry it is not attractive from a cost viewpoint to use the known expensive filters. Furthermore, the known filters do not always provide the desired result. For market gardens for instance no satisfactory solution has heretofore been found. In many tested techniques the desired degree of purification was not obtained or the operational management was uncertain. Other techniques which did provide the desired result were found to be unfeasible from the point of view of cost. Finally, many applied techniques required a large operational space which was thus no longer available for company operations.

Operational reliability is moreover essential, particularly in market gardens, because the purified water is used again for irrigation of the cultivated crops. A purification plant which does not operate or operates badly can result in crops dying off, which could lead to great financial damage. In addition, many of these companies cannot afford expensive installations because cultivation would then no longer be profitable.

Similar problems also occur in the case of companies such as car washes. The cost aspect is particularly important here.

The problem with the installation known from EP-A-0 265 303 could be that due to the upward flow of water through the filter bed of particulate material expansion will occur. The packing of the bed is then disturbed, "craters" are created and adequate filtration can no longer take place. That there is a problem of expansion can be underlined by the fact that the installation is higher than the filter bed and that there is a draining point located above the top of the filter bed.

It is therefore the object of the present invention to provide an installation for purifying contaminated water, wherein the desired degree of purification is obtained, the operational management is certain and both the investment costs and the costs of operational management are lower than in the currently known techniques.

The installation according the present application is characterized in that the filter bed comprises an expansion preventing covering layer situated above the level on which the purified water is drained. As the water is already being drained at a level lying below the top of the filter bed, the top layer of the bed remains dry and ensures that the filter bed material remains well packed whereby expansion is prevented and the filter action is preserved.

If desired, the bed can advantageously further be aerated, preferably from below. Aeration is sometimes necessary when in addition to the filter action of the bed a biological purification of the water is desired and insufficient oxygen is available for the micro-organisms. The degradation of organic material in the contaminated water can be achieved by biological purification. According to a preferred embodiment of the invention the purification is therefore performed in an aerated sand filter.

Also in the case of aeration no formation of air bubbles and expansion of the bed resulting therefrom occurs owing to the presence of a covering layer. The result is a very even distribution of both water and air over the filter bed, whereby particularly the conversion of organic material by micro-organisms proceeds optimally.

According to the invention the water is thus drained from the filter bed before it reaches the surface thereof. As already noted above, this is done to prevent the upward flowing water disturbing the filter bed. Draining will then advantageously take place at a lower level, such as for instance via the side of the bed. The draining level is preferably situated, determined from the top of the bed, substantially between about half and about one twentieth of the bed height, and preferably at about one third of the bed height.

A filtration can optionally already take place prior to feeding of the contaminated water to the bed. Contaminants which are not separated out in advance and which are not degraded by the micro-organisms present, mainly inert material such as sand, remain behind in the filter bed. It has been found that this does not affect the action of the filter in a negative sense. If desired, the filter bed material can however be replaced after a period of time.

Particularly in the case of filters which are used in car washes it can be advantageous to include a sludge collector, for instance in the form of a settling tank, at the water outlet opening. In car washes a lot of sludge, such as clay and the like, also comes with the water. In these cases the grain size of the bed is chosen such that the sludge particles are not trapped in the sand bed but are transported out of the bed with the water. They are then removed by the sludge collector. It has been found that a grain size between 3 and 5 mm is particularly suitable for this purpose.

In advantageous manner both the feed and discharge of the water take place by means of perforated tubes, such as commercially available drainage hoses. The drainage hoses are preferably wrapped with a water-permeable material which prevents blockage of the draining apertures with sand and contaminants. The material is for instance a mat of fibres. Such wrapped hoses are likewise available commercially.

The aeration preferably takes place by means of aerators wherein the air flows out of a porous sintered plastic. Such aerators consist of a housing provided on at least one side with a plate of porous sintered plastic. The housing comprises an inlet opening for air, which air flows out again as small bubbles via the porous plate. The use of porous sintered plastic, in particular polyethylene, results in an exceptionally good distribution of the supplied air. In addition, the material is very inexpensive compared with alternative materials and it has been found that the material is not susceptible to contamination and is thereby operationally very reliable. However, other aerating means can of course also be applied such as ceramic effervescent blocks and the like.

According to a preferred embodiment sand is used as packing material for the filter bed. Sand is relatively inexpensive and has been found to be particularly suitable. Coarse sand is recommended, for instance with a particle size between 0.1 and 10.0 mm, preferably between 0.2 and 8.0 mm, more preferably between 0.3 and 7.0 mm and most preferably between 0.4 and 5.0 mm, or between 0.5 and 3.0 mm. It is possible to build up the filter bed from different layers of sand with different average particle sizes. It is therefore advantageous for instance to use as filter layer sand with a particle size between 0.2 and 1.0 mm, while as expansion-preventing covering layer coarser sand with a particle size between 0.5 and 3.0 mm is conversely used. Subject to the contaminants present in the water for purifying other combinations of sand types can also be chosen. In addition to sand, other suitable granular material can also be applied.

Additives to improve purification can optionally be added to the water for purifying, such as enzymes for degrading organic material.

The new method according to the invention can be performed on a relatively small surface area, whereby little operational space is required. In the known filters wherein water is supplied from above a very large area is necessary in order to be able to achieve the required capacity, precisely due to the slow trickling of the water. In particular cases, for instance when the filter according to the invention is built wholly underground, no operational space is lost at all. When the filter is situated under the ground the surface which is occupied thereby can simply be used for a different purpose. Total closure of the upper part of the filter preferably does not take place however, because the admitted air would not then be able to escape. A not wholly air-tight layer, such as a paved terrace or a lawn, would be very suitable as covering.

The filter bed according to the invention moreover has a limited height, whereby no heavy bearing constructions are necessary. A high sand bed does of course already have a considerable weight per se. The problem with high beds is often that from a structural point of view they can have only a limited surface. The cleaning capacity is related to the surface area and, as has been found according to the invention, not so much to the height of the bed, because bacterial degradation already takes place within a metre or half a metre. It has also been found that with a processing time of the water in the bed of half an hour to an hour the greater part of the pathogens possibly present in the water have already died.

Surprisingly, it has further been found that in the manner according to the invention a very inexpensive and effectively operating filter is obtained for the purification of contaminated water. By using commercially available drainage hose, such as is much used in market gardening, for the supply and drainage of the water, expensive supply and drainage constructions are no longer necessary. It has been found that the drainage hose is not susceptible to contamination and is therewith operationally very reliable.

The invention will be further elucidated with reference to the annexed drawing, in which a partly broken-away perspective view of an installation according to the invention is shown.

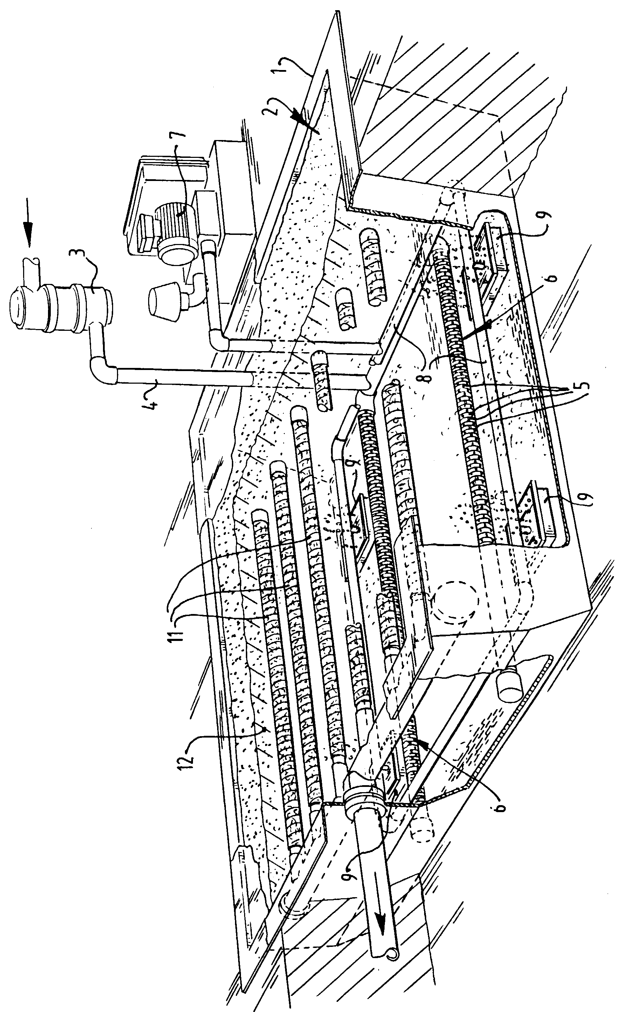

The figure shows a container 1 in which a packed sand bed 2 is situated. The container 1 can be a tank with rigid walls of plastic or metal but can also consist of a thick foil. In the shown embodiment the filter is placed in the ground.

The water for cleaning is supplied by means of a pump, optionally via a filter 3, and feed conduits 4 to the underside of the bed 2. There it will be pressed through the apertures 5 of the feed hoses 6 through the sand and flow upward. Via a separate pump 7 and a conduit system 8 air is supplied to aerators 9 which send the air into the bed in the form of small bubbles 10. Cleaned water is drained by means of hoses 11 which are wrapped in a fibre mat and provided with apertures (not shown). The air disappears largely via the upper side of the filter bed. The upper layer of sand 12 prevents expansion of the bed.

The contaminated feed water is optionally pre-filtered in a coarse filter 3. The water supply and drainage capacity are geared to each other such that substantially all the water leaves the filter via the hoses 11 and the sand bed 12 thereabove remains dry.

### EXAMPLES

The following examples illustrate a number of embodiments of the method according to the invention without limiting the invention in any way.

### EXAMPLE 1

In a market garden Gerberas were cultivated in glasshouses. The culture took place on glass wool mats with artificial irrigation, wherein each plant was provided with a dripper with an aperture of 0.6 to 0.8 mm for feeding the required water. The necessary nutrients were added beforehand to the water.

The surplus water flows via the glass wool mats to a gutter and conventionally is drained therefrom to the sewer. However, because the water still often contains large quantities of nutrients which could indirectly cause eutrophication of the surface water, legal requirements are nowadays laid down relating to the purity of the waste water. This has the consequence that purification is necessary before drainage. In such a situation the purified water can of course also be re-used.

To be suitable for re-use purified water must comply with a number of microbial requirements. In addition, it must contain substantially no algae. This latter requirement in particular is essential because in the case of algal growth, which can occur very quickly, the aperture of the drippers for the plants can become blocked, whereby the plants are left without water and die. The drippers must then be cleaned manually which, in the case of tens of thousands of drippers, is a very labour-intensive operation. In this situation it was investigated whether it is possible to purify and re-use the drained water.

An experimental filter according to the invention was installed in the glasshouse. The filter was arranged under the ground surface in the glasshouse. For this purpose a hole was dug with a length of 12 m, a width of 2 m and a depth of 0.75 m. The bottom and walls were first covered with an insulation blanket and then with watertight foil. The drainage hoses, pipes and aerators were arranged hereon for the supply of water and air. A sand bed with a thickness of 0.5 m was subsequently poured. The sand had a particle diameter of 0.5 to 3.0 mm. Drainage hoses for the water discharge were placed on this sand bed. A further layer of sand was then poured thereon with a thickness of 0.25 m. The filter was finally provided with the required connections and feed pumps for air and water.

The water drained from the glasshouses was now guided through the filter, wherein the filter was continuously aerated. The cleaned water was re-used for irrigation of the crops after being provided with nutrients by the methods usual for this purpose. The water deficiency resulting from absorption by the plants and evaporation in the glasshouse was replenished with mains water.

The operation of the filter was tested for a year. The average throughput of water through the filter amounted to 6 cubic metres per hour. The temperature of the water lay always between 15 and 25°C. The ingoing contaminated water and the outgoing purified water were both analyzed regularly. Typical analysis results are shown in table 1.

**Table 1.**

| Analysis results of in- and outgoing water. | | |
|---|---|---|
| Analysis parameter | Before filter | After filter |
| Aerobic germ count (cfu/ml)* | 1000 | 500 |
| Enterobacteriacea (cfu/ml)* | 20 | 1 |
| Fungi (cfu/ml)* | 15 | 1 |
| Pseudomonacea (cfu/ml)* | 50 | 0 |
| Algae | present | absent |

| | | |
|---|---|---|
| * cfu = colony-forming units | | |

The cleaned water hereby complied fully with the set requirements. The cultivated plants irrigated with the purified water also complied with all requirements. The filter functioned for the whole year without malfunction.

### EXAMPLE 2

A company which operated a car wash was no longer permitted to drain the contaminated washing water to the sewer. Diverse costly techniques were tested in order to purify the washing water sufficiently. None of these gave satisfactory results.

A test was then carried out with a filter according to the invention.

The housing of the filter consisted of a rigid plastic casing with a length of 1.4 m, a width of 1.0 m and a height of 1.0 m. The sand bed was 0.75 m high, while the drainage hoses for the discharge were situated in the sand bed at a height of 0.5 m. Here also the filter was aerated.

The water coming from the car wash contained a comparatively large amount of aromatic hydrocarbons and remnants of cleaning agents used for washing the cars. The washing water was guided through the sand filter and returned to the collection tank, from where it was used again in the car wash. The filter was tested for six months. The average throughput amounted in this period to 600-800 litres per hour. The ingoing and outgoing water was tested regularly for clarity by means of turbidity measurements and for the amount of sediment. The ingoing water was found herein to be black and opaque. The outgoing purified water was found to be completely clear and transparent and was suitable for re-use.

Measurements showed that the chemical oxygen demand (COD) was reduced from ± 3200 to ± 300 mg O₂/l, a reduction of roughly 90%.

## Claims

1. Installation for purifying contaminated water comprising a filter bed (2) of particulate material, means (6) for carrying contaminated water through the filter bed from below, and means (11) for draining purified water from the filter bed at a level located a determined distance from the top of the bed, **characterized in that** the filter bed comprises an expansion preventing covering layer (12) situated above said level.

2. Installation as claimed in claim 1, wherein the particulate material is sand, **characterized in that** said covering layer (12) comprises sand with a particle size larger than that of the remainder of the bed (2).

3. Installation as claimed in claim 2, **characterized in that** the sand of the covering layer (12) has a particle size between 0.5 and 3.0 mm, and the sand of the remainder of the filter bed (2) has a particle size between 0.2 and 1.0 mm.

4. Installation as claimed in any of the claims 1-3, **characterized in that** the height of the filter bed (2) is substantially equal or smaller than the width and/or the length thereof.

5. Installation as claimed in any of the claims 1-4, further comprising means (9) for aerating the filter bed, **characterized in that** said covering layer (12) is an air permeable layer, such as a paved terrace or a lawn.

6. Installation as claimed in any of the claims 1-5, **characterized in that** the means (6) for carrying contaminated water from below through the filter bed are formed by a feed tube (6) provided with apertures (5) and located substantially horizontally in the bed.

7. Installation as claimed in claim 5 and 6, **characterized in that** said aerating means (9) are located below said feed tube (6).

8. Installation as claimed in any of the claims 1-7, **characterized in that** the means (11) for draining purified water from the filter bed (2) at a level located a determined distance from the top of the bed is a draining tube (11) provided with apertures and situated, determined from the top of the bed (2), substantially between about half the bed height and about one twentieth of the bed height, and preferably at about one third of the bed height.

9. Installation as claimed in claim 8, **characterized in that** the draining tube (11) is provided on its outside with means for preventing blockage of the apertures, preferably formed by a water-permeable mat.

10. Installation as claimed in any of the claims 6-9, **characterized in that** the feed tube (6) and the draining tube (11) are perforated flexible hoses.

11. Installation as claimed in any of the claims 1-10, **characterized in that** the means (9) for aerating the filter bed are formed by a housing closed at least on one side by a porous plate manufactured from sintered plastic, which housing is provided with an inlet opening for air and wherein the air is discharged in the form of bubbles through the sintered plastic plate.

## Patentansprüche

1. Anlage zum Reinigen von verschmutztem Wasser, die umfaßt ein Filterbett (2) aus Partikelmaterial, Mittel (6) zum Führen von verschmutztem Wasser durch das Filterbett von unten und Mittel (11) zum Abführen von gereinigtem Wasser aus dem Filterbett bei einem Niveau, das in einem vorgegebenen Abstand von der Oberseite des Bettes angeordnet ist, **dadurch gekennzeichnet,** daß das Filterbett eine eine Ausdehnung verhindernde Deckschicht (12), die oberhalb des Niveaus angeordnet ist, umfaßt.

2. Anlage gemäß Anspruch 1,
wobei das Partikelmaterial Sand ist, **dadurch gekennzeichnet,** daß die Deckschicht (12) Sand mit einer Partikelgröße, die größer als die des Rests des Bettes (2) ist, umfaßt.

3. Anlage gemäß Anspruch 2,
**dadurch gekennzeichnet,** daß der Sand der Deckschicht (12) eine Partikelgröße zwischen 0,5 und 3,0 mm und der Sand des Rests des Filterbetts (2) eine Partikelgröße zwischen 0,2 und 1,0 mm aufweist.

4. Anlage gemäß einem der Ansprüche 1 bis 3,
**dadurch gekennzeichnet,** daß die Höhe des Filterbetts (2) im wesentlichen gleich oder geringer als die Breite und/oder die Länge desselben ist.

5. Anlage gemäß einem der Ansprüche 1 bis 4,
die weiter Mittel (9) zum Belüften des Filterbetts umfaßt, **dadurch gekennzeichnet,** daß die Deckschicht (12) eine luftdurchlässige Schicht wie beispielsweise eine gepflasterte Terrasse oder ein Rasen ist.

6. Anlage gemäß einem der Ansprüche 1 bis 5,
**dadurch gekennzeichnet,** daß die Mittel (6) zum Führen von verschmutztem Wasser von unten durch das Filterbett durch ein Zuführrohr (6), das mit Öffnungen (5) versehen ist und im wesentlichen horizontal in dem Bett angeordnet ist, gebildet sind.

7. Anlage gemäß Anspruch 5 und 6,
**dadurch gekennzeichnet,** daß die Belüftungsmittel (9) unter dem Zuführrohr (6) angeordnet sind.

8. Anlage gemäß einem der Ansprüche 1 bis 7,
**dadurch gekennzeichnet,** daß das Mittel (11) zum Abführen von gereinigtem Wasser aus dem Filterbett (2) an einem Niveau, das in einem vorgegebenen Abstand von der Oberseite des Bettes angeordnet ist, ein Drainagerohr (11) ist, das mit Öffnungen versehen und im wesentlichen zwischen etwa der Hälfte der Betthöhe und etwa einem Zwanzigstel der Betthöhe, und bevorzugt bei etwa einem Drittel der Betthöhe, bestimmt von der Oberseite des Bettes (2), angeordnet ist.

9. Anlage gemäß Anspruch 8,
**dadurch gekennzeichnet,** daß das Drainagerohr (11) auf dessen Außenseite mit Mitteln zum Verhindern des Verstopfens der Öffnungen, die bevorzugt aus einer wasserdurchlässigen Matte gebildet sind, versehen ist.

10. Anlage gemäß einem der Ansprüche 6 bis 9,
**dadurch gekennzeichnet,** daß das Zuführrohr (6) und das Drainagerohr (11) perforierte, flexible Schläuche sind.

11. Anlage gemäß einem der Ansprüche 1 bis 10,
**dadurch gekennzeichnet,** daß die Mittel (9) zum Belüften des Filterbetts durch ein Gehäuse, das auf wenigstens einer Seite mittels einer porösen Platte, die aus gesintertem Kunststoff gefertigt ist, verschlossen ist, gebildet wird, wobei das Gehäuse mit einer Einlaßöffnung für Luft versehen ist und wobei die Luft in Form von Blasen durch die gesinterte Kunststoffplatte abgegeben wird.

## Revendications

1. Installation pour purifier de l'eau contaminée comprenant un lit de filtrage (2) en matériau particulaire, des moyens (6) pour transporter de l'eau contaminée à travers le lit de filtrage depuis le bas, et des moyens (11) pour drainer l'eau purifiée depuis le lit de filtrage à un niveau disposé à une distance déterminée du haut du lit, caractérisée en ce que le lit de filtrage comprend une couche (12) de couverture évitant une expansion située au-dessus dudit niveau.

2. Installation selon la revendication 1, dans laquelle le matériau particulaire est du sable, caractérisée en ce que ladite couche de couverture (12) comprend du sable ayant une dimension de particules plus grande que celle du reste du lit (2).

3. Installation selon la revendication 2, caractérisée en ce que le sable de la couche de couverture (12) a une dimension de particules comprise entre 0,5 et 3,0 mm, et le sable du reste de la couche de filtrage (2) a une taille de particules comprise entre 0,2 et 1,0 mm.

4. Installation selon l'une quelconque des revendications 1 à 3, caractérisée en ce que la hauteur du lit de filtrage (2) est approximativement égale ou inférieure à la largeur et/ou la longueur de celui-ci.

5. Installation selon l'une quelconque des revendications 1 à 4, comprenant en outre des moyens (9) pour aérer le lit de filtrage, caractérisée en ce que ladite couche de couverture (12) est une couche perméable à l'air, telle qu'une terrasse pavée ou une pelouse.

6. Installation selon l'une quelconque des revendications 1 à 5, caractérisée en ce que les moyens (6) pour transporter l'eau contaminée depuis le bas à travers le lit de filtrage sont formés par un tube d'alimentation (6) muni d'ouvertures (5) et disposé approximativement horizontalement dans le lit.

7. Installation selon la revendication 5 et la revendication 6, caractérisée en ce que lesdits moyens d'aération (9) sont disposés sous ledit tube d'alimentation (6).

8. Installation selon l'une quelconque des revendications 1 à 7, caractérisée en ce que les moyens (11 ) pour drainer l'eau purifiée depuis le lit de filtrage (2) à un niveau disposé à une distance détérminée du haut du lit sont constitués par un tube de drainage (11 ) muni d'ouvertures et disposé, en comptant depuis le haut du lit (2) approximativement entre environ la moitié de la hauteur du lit et environ 1/20 de la hauteur du lit, et de préférence à environ 1/3 de la hauteur du lit.

9. Installation selon la revendication 8, caractérisée en ce que le tube de drainage (11) est muni sur son pourtour de moyens pour éviter l'obturation des ouvertures, de préférence constitués par un mat ou matelas perméable à l'eau.

10. Installation selon l'une quelconque des revendications 6 à 9, caractérisée en ce que le tube d'alimentation (6) et le tube de drainage (11) sont des tuyaux flexibles perforés.

11. Installation selon l'une quelconque des revendications 1 à 10, caractérisée en ce que les moyens (9) pour aérer le lit de filtrage sont formés par un boîtier fermé au moins à l'un de ses côtés par une plaque poreuse fabriquée en matière plastique agglomérée, ce boîtier étant muni d'une ouverture d'entrée pour l'air et où l'air est évacué sous forme de bulles à travers la plaque en matière plastique agglomérée.
